# EUROPEAN PATENT APPLICATION

(11) **EP 4 345 067 A1**
(43) Date of publication of application: **03.04.2024**
(21) Application number: 23153759.8
(22) Date of filing: 27.01.2023
(51) Int. Cl.: C01G 53/04, C01G 53/00, H01M 4/36, H01M 4/525

(54) **POSITIVE ACTIVE MATERIAL FOR RECHARGEABLE LITHIUM BATTERIES, PREPARATION METHOD THEREOF, AND RECHARGEABLE LITHIUM BATTERIES**

(30) Priority: 30.09.2022 US 202217958203
(71) Applicant: Samsung SDI Co., Ltd., Yongin-si, Gyeonggi-do 17084 (KR); Board of Regents, The University of Texas System, Austin, TX 78701 (US)
(72) Inventor: MANTHIRAM, Arumugam, Austin, 78701 (US); KIM, Youngjin, Austin, 78701 (US); KIM, Hanseul, Austin, 78759 (US); SEONG, Wonmo, 17084 Yongin-si (KR); KONG, Youngsun, 17084 Yongin-si (KR)
(74) Representative: Marks & Clerk LLP

(57) **Abstract**

An active material for a rechargeable lithium battery, a manufacturing method, and a rechargeable lithium battery are provided, the positive active material including lithium nickel-based composite oxide particles having a molar content (e.g., amount) of nickel of greater than or equal to about 80 mol% based on the total element excluding lithium and oxygen and containing at least one element selected from B, Sb, and Nb, a first coating layer disposed on the surface of the particles and containing at least one element selected from B, Sb, and Nb, and a second coating layer disposed on the first coating layer and containing a metal phosphate.

## Description

### BACKGROUND

### 1. Field

Embodiments of the present disclosure described herein are related to a positive active material for a rechargeable lithium battery, a preparing method thereof, and a rechargeable lithium battery including the same.

### 2. Description of the Related Art

A portable information device such as a cell phone, a laptop, a smart phone, and/or the like or an electric vehicle has utilized a rechargeable lithium battery having high energy density and easy portability as a driving power source (or power driving source). Recently, research has been actively conducted to utilize a rechargeable lithium battery with high energy density as a driving power source or a power storage power source for hybrid or electric vehicles.

In order to meet this use, research on a positive active material capable of realizing high capacity, high stability, and long cycle-life performance are being made. In general, a ternary positive active material of Ni, Co, and Mn or Ni, Co, and Al is being utilized. However, in recent years, as an active material with higher energy density has been required, while a supply of rare metals has been depleted, a high nickel-based (high-Ni; Ni-rich) positive active material or a cobalt-free high nickel-based positive active material in which a content (e.g., amount) of cobalt is decreased, but a content (e.g., amount) of nickel is increased has been proposed.

However, as the content (e.g., amount) of nickel in the positive active material is increased, there is another problem of deteriorating stability of crystal structures and increasing residual lithium on the surface of the positive active material. As a result, the initial charge/discharge efficiency of a battery decreases, and a side reaction inside the battery increases, resulting in increasing an amount of generated gas and deteriorating processability.

In particular, in order to increase energy density of the high nickel-based positive active material, when a battery is driven under a high voltage condition, battery safety is sharply deteriorated due to a side reaction between a residual lithium compound at a positive electrode and an electrolyte. This makes it difficult to manufacture a battery with both (e.g., simultaneously) high energy and high safety.

In order to solve this problem, a technique of doping a different type or kind of element onto the positive active material has been proposed. However, the doping element further increases the residual lithium content (e.g., amount) and sharply deteriorates the battery safety due to the side reaction under severe conditions such as a high voltage and also, increases resistance of the positive electrode and rather reduces initial charge/discharge efficiency.

In some embodiments, a technique for protecting the positive active material by applying a coating material thereto to secure the battery safety during high voltage-driving has been proposed. However, although cycle-life characteristics may be improved, there is the common problem of reducing the initial efficiency due to increased resistance on the positive electrode surface.

### SUMMARY

Aspects of embodiments of the present disclosure are directed toward a high nickel-based positive active material having improved initial charge/discharge efficiency and battery safety at a high voltage of 4.35 V or higher, a preparing method thereof, and a rechargeable lithium battery including the same.

Additional aspects will be set forth in part in the description which follows and, in part, will be apparent from the description, or may be learned by practice of the presented embodiments of the disclosure.

In an embodiment, a positive active material for a rechargeable lithium battery includes lithium nickel-based composite oxide particles having a molar content (e.g., amount) of nickel of greater than or equal to about 80 mol% based on the total elements excluding lithium and oxygen and containing at least one element selected from B, Sb, and Nb, a first coating layer disposed on the surface of the particles and containing at least one element selected from B, Sb, and Nb, and a second coating layer disposed on the first coating layer and containing a metal phosphate.

In another embodiment, a method of preparing a positive active material for a rechargeable lithium battery includes (i) mixing a nickel-based composite hydroxide having a molar content (e.g., amount) of nickel of greater than or equal to about 80 mol% based on the total elements excluding oxygen and hydrogen, a raw material containing at least one element selected from B, Sb, and Nb, and a lithium raw material and performing a first heat treatment to obtain lithium nickel-based composite oxide particles, and (ii) mixing the obtained lithium nickel-based composite oxide particles, a metal raw material, and a phosphorus-based raw material and performing a second heat treatment.

In another embodiment, a rechargeable lithium battery includes a positive electrode including the positive active material, a negative electrode, and an electrolyte.

At least some of the above and other features of the invention are set out in the claims.

According to an embodiment, the positive active material for the rechargeable lithium battery as a high nickel-based layered positive active material exhibits both (e.g., simultaneously) improved initial charge/discharge efficiency and battery safety under a high voltage condition.

### BRIEF DESCRIPTION OF THE DRAWINGS

FIG. 1 is a schematic view showing the shape of a plate-shaped primary particle according to an embodiment.
FIG. 2 is a view for explaining the definition of a radial orientation in secondary particles according to an embodiment.
FIG. 3 is a schematic view showing a cross-sectional structure of a secondary particle according to an embodiment.
FIG. 4 is a schematic view illustrating a rechargeable lithium battery, according to an embodiment.
FIG. 5 is a TOF-SIMS depth profile analysis graph for the intermediate positive active material of Example 1, according to an embodiment.
FIG. 6 is an image mapping the distribution of BO₂⁻ ions through the analysis of FIG. 5, according to an embodiment.
FIG. 7 is a SEM-EDS analysis image of the positive active material of Example 1, according to an embodiment.
FIG. 8 is a graph analyzing Al, P, and Ni contents by linear scanning in the direction of the arrow in FIG. 7, according to an embodiment.
FIG. 9 is a SEM image of the surface of the positive active material of Comparative Example 1, according to an embodiment.
FIG. 10 is an SEM image of a cross section of the positive active material of Comparative Example 1, according to an embodiment.
FIG. 11 is an SEM image of the surface of the positive active material of Comparative Example 4, according to an embodiment.
FIG. 12 is an SEM image of a cross section of the positive active material of Comparative Example 4, according to an embodiment.
FIG. 13 is an SEM image of the surface of the intermediate positive active material of Example 1, according to an embodiment.
FIG. 14 is an SEM image of a cross section of the intermediate positive active material of Example 1, according to an embodiment.
FIG. 15 is a SEM image of the surface of the intermediate positive active material of Example 2, according to an embodiment.
FIG. 16 is an SEM image of the surface of the intermediate positive active material of Example 3, according to an embodiment.

### DETAILED DESCRIPTION

Hereinafter, specific embodiments will be described in more detail, examples of which are illustrated in the accompanying drawings, wherein like reference numerals refer to like elements throughout, and duplicative descriptions thereof may not be provided. However, this disclosure may be embodied in many different forms and is not construed as limited to the example embodiments set forth herein.

The terminology utilized herein is utilized to describe embodiments only, and is not intended to limit the present disclosure. The singular expression includes the plural expression unless the context clearly dictates otherwise.

As utilized herein, "combination thereof" refers to a mixture, laminate, composite, copolymer, alloy, blend, reaction product, and/or the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout, and duplicative descriptions thereof may not be provided the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In some embodiments, "layer" herein includes not only a shape formed on the whole surface when viewed from a plan view, but also a shape formed on a partial surface.

In some embodiments, the average particle size (e.g., diameter) may be measured by a method well known to those skilled in the art, for example, it may be measured by a particle size analyzer, or it may be measured by an optical microscope image such as a transmission electron micrograph or a scanning electron micrograph. In some embodiments, it is possible to obtain an average particle diameter value by measuring utilizing a dynamic light scattering method, performing data analysis, counting the number of particles for each particle size range, and calculating from this. Unless otherwise defined, the average particle diameter may refer to the diameter (D50) of particles having a cumulative volume of 50 volume% in the particle size distribution. In addition, the average particle diameter may be measured by an electron microscope image in the following manner: 20 particles are randomly selected in an SEM image, parallel lines are drawn to sandwich the projection images of the particles, and the largest distance between the parallel lines is measured with respect to each of the particles to determine their particle diameters. The particle size distribution is then obtained from the measured particle diameters, where D50 of the particles having a cumulative volume of 50 % is taken as the average particle diameter.

Herein, "or" is not to be construed as an exclusive meaning, for example, "A or B" is construed to include A, B, A+B, and/or the like. In addition, the term metal includes general metals, transition metals, and semi-metals.

### Positive Active Material

In an embodiment, a positive active material for a rechargeable lithium battery includes lithium nickel-based composite oxide particles having a molar content (e.g., amount) of nickel of greater than or equal to about 80 mol% based on the total elements excluding lithium and oxygen and containing at least one element selected from B, Sb, and Nb, a first coating layer disposed on the surface of the particles and containing at least one element selected from B, Sb, and Nb, and a second coating layer disposed on the first coating layer and containing a metal phosphate.

The positive active material may be referred to as a high nickel-based layered positive active material. The molar content (e.g., amount) of nickel may be, for example, greater than or equal to about 85 mol%, greater than or equal to about 88 mol%, greater than or equal to about 90 mol%, greater than or equal to about 92 mol%, and less than or equal to about 100 mol% or less than or equal to about 99 mol% based on the total elements excluding lithium and oxygen in the lithium nickel-based composite oxide. The positive active material according to an embodiment is a high nickel-based material, and improves stability of the crystal structure to increase the initial efficiency and to improve a problem of battery safety due to residual lithium.

In some embodiments, the positive active material may be a cobalt-free layered positive active material that does not contain cobalt or contains a very small amount of cobalt. Cobalt is a rare metal, and has a problem of being in short supply and expensive due to the lack of reserves. However, because cobalt plays a key role in forming the structure of the positive active material, when cobalt is removed, structural defects may occur, increasing resistance, making it difficult to secure a long cycle-life, and deteriorating overall battery performance. In some embodiments, the previously proposed cobalt-free positive active material having an olivine-based or spinel crystal structure has a low lithium usable capacity, so that there is a limitation in realizing high energy. In an embodiment, a high nickel-based cobalt-free layered positive active material capable of realizing a high capacity and structural stability is improved to provide a positive active material capable of realizing excellent or suitable battery performance even under high voltage conditions.

The positive active material is characterized in that it contains at least one element selected from B, Sb, and Nb. The B, Sb, and/or Nb may be said to be a type or kind of doping element. These elements play a role in improving the stability of the crystal structure of the positive active material, and may slow the grain growth rate during high-temperature sintering compared to other doping elements. Accordingly, under the same synthesis conditions, the elements may make the size of the primary particles constituting the secondary particles smaller. The smaller the size of the primary particles, the shorter the lithium diffusion distance required for lithium intercalation and deintercalation, so that the initial charge/discharge efficiency of the battery may increase and cycle-life characteristics may be improved. However, contrary to these advantages, the elements react with lithium to exist on the surface of the positive active material particles in the form of oxides, which act as residual lithium, and accordingly, under severe conditions such as high voltage, battery safety may be rapidly deteriorated due to surface side reactions, positive electrode resistance may be increased, and thus initial charge/discharge efficiency may be rather reduced. For example, in order to improve the initial charge/discharge efficiency, it is possible to synthesize secondary particles in which a plurality of primary particles having a reduced size are aggregated by introducing doping elements such as B, Sb, and/or Nb, but the residual lithium on the surface may be increased.

In an embodiment, in order to solve the above problems, doping elements such as B, Sb, and Nb are introduced, but the surface of the positive active material is coated with a metal phosphate, so that residual lithium is not exposed on the surface, thereby suppressing a side reaction between the positive electrode and the electrolyte to improve high voltage battery safety, while at the same time to improve cell performance without the coating acting as a resistance or reducing capacity.

Accordingly, the positive active material according to an embodiment may be a high nickel-based cobalt-free layered positive active material having improved initial charge/discharge efficiency and cycle-life characteristics and secured high voltage safety at the same time, the size of the primary particles constituting the secondary particles is relatively small, and it may be a positive electrode material coated with a metal phosphate on the surface.

### Lithium Nickel-Based Composite Oxide Particles

The lithium nickel-based composite oxide particles correspond to a type or kind of core, and may have a particle shape while including the lithium nickel-based composite oxide.

The particles may be in the form of secondary particles formed by aggregation of a plurality of primary particles. The secondary particles may be spherical, ellipsoidal, polygonal, amorphous, and/or the like. An embodiment is characterized in that the size of the primary particles is relatively small. It is understood that the growth of primary particles is controlled or selected by slowing a grain growth rate during high-temperature sintering according to the introduction of doping elements such as B, Sb, and/or Nb and secondary particles having smaller primary particles may be synthesized under the same synthesis conditions as compared to a case in which no doping element is introduced or another doping element is introduced.

The average particle diameter of the primary particles may be less than about 200 nm, for example, greater than or equal to about 50 nm and less than about 200 nm, greater than or equal to about 100 nm and less than about 200 nm, greater than or equal to about 50 nm and less than or equal to about 190 nm, or greater than or equal to about 50 nm and less than or equal to about 180 nm. When the average particle diameter of the primary particles satisfies the above range, the lithium diffusion path may be shortened to reduce resistance and improve charge/discharge efficiency. Here, the average particle diameter of the primary particles refers to the size of the primary particles observed on the surface of the secondary particles, and may be obtained by selecting about 20 random primary particles from the electron micrograph of the surface of the secondary particles, measuring the particle diameter (or the long diameter, or the length of the long axis), and then calculating the arithmetic average.

The secondary particles may have an average particle diameter of about 5 µm to about 25 µm, for example, about 5 µm to about 20 µm, about 7 µm to about 20 µm, about 10 µm to about 20 µm, or about 12 µm to about 18 µm. Herein, the average particle diameter of the secondary particles may be a value obtained by selecting about 20 secondary particles from the electron micrograph of the positive active material, measuring the particle diameter (or the long diameter, or the length of the long axis), and then calculating the arithmetic average.

In an example, the lithium nickel-based composite oxide particles may be in the form of secondary particles in which a plurality of primary particles are aggregated, and at least a portion of the primary particles may be radially oriented. In this case, a lithium diffusivity increases, so that the initial charge/discharge efficiency is improved and a high capacity may be secured. In some embodiments, substantially uniform expansion and contraction is possible during the intercalation and deintercalation process of lithium, which improves the problem of cracking of the positive active material due to charging and discharging, thereby improving battery cycle-life characteristics and safety. Hereinafter, the radial structure will be described in more detail.

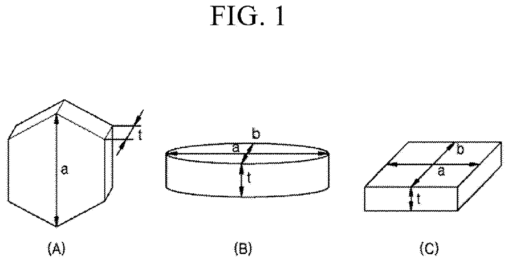

At least a portion of the primary particles may have a plate shape. FIG. 1 is a schematic view showing the plate shape of primary particles. Referring to FIG. 1, the primary particles may have one or more suitable detailed shapes while having a basic plate structure, for example, (A) a polygonal nanoplate shape such as a hexagon, (B) a nanodisk shape, and/or (C) a rectangular parallelepiped shape.

In FIG. 1, "a" refers to the length of the long axis of the primary particle, "b" refers to the length of the short axis, and "t" refers to the thickness. Herein, the length (a) of the long axis refers to a maximum length with respect to the widest surface of the primary particle. The thickness (t) may refer to a maximum length of a surface that is approximately (e.g., substantially) perpendicular or normal to the widest surface of the primary particle. A direction containing the length (a) of the long axis and the length (b) of the short axis is referred to as the plane direction, and a direction in which the thickness (t) is defined is referred to as a thickness direction.

The thickness (t) of the primary particles may be smaller than the length (a) of the long axis and the length (b) of the short axis, which are the lengths in the plane direction. The length (a) of the long axis among the lengths in the plane direction may be longer or the same as the length (b) of the short axis.

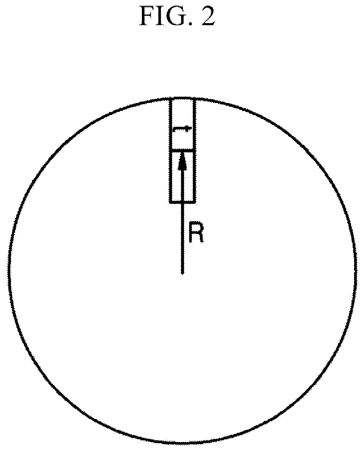

In the positive active material, at least a portion of the primary particles may have a radially oriented structure, and for example, long axes of the primary particles may be oriented in a radial direction. FIG. 2 is a view for explaining the definition of a radial orientation (or radial alignment). In an embodiment, the radially oriented structure refers to that, as shown in FIG. 2, the thickness (t) direction of the primary particles is perpendicular to or within an angle of about ±5° of perpendicular to the direction (R) from the center toward the surface of the of the particle.

When at least a portion of the primary particles are radially oriented in this way, it may have a relatively large number of lithium diffusion pathways between the primary particles on the surface side of the secondary particles, and a large number of crystal planes capable of transferring lithium are exposed to the outside, which improves lithium diffusivity, so that high initial efficiency and high capacity may be secured. In some embodiments, when the primary particles are oriented radially, the pores exposed on the surface of the secondary particles are directed toward the center of the secondary particles, thereby further promoting the diffusion of lithium. Due to the radially oriented primary particles, substantially uniform contraction and expansion are possible when lithium is deintercalated and intercalated, and when lithium is deintercalated, pores exist in the Miller index (001) plane direction, which is the direction in which the particles expand, so that they may act as a buffer. Accordingly, a probability of cracks occurring during contraction and expansion of the positive active material may be lowered, and the internal pores further alleviate the volume change, thereby reducing the cracks generated between primary particles during charging and discharging, and consequently, cycle-life characteristics of the rechargeable lithium battery may be improved and a resistance increase phenomenon may be reduced.

In an example, the secondary particles may include an inner portion having an irregular porous structure and an outer portion having a radially oriented structure as a region around (e.g., surrounding) the inner portion.

The irregular porous structure refers to a structure having primary particles and pores, but the pore size, shape, position, etc. are not regular. For example, the primary particles disposed in the inner portion may be arranged without regularity, unlike the primary particles disposed in the outer portion. The term "outer portion" may refer to a region (e.g., of the particle) within about 30 length% to about 50 length% from the outermost surface, for example, within about 40 length% from the outermost surface with respect to the distance from the center to the surface of the secondary particle, or in some embodiments, may refer to a region within about 3 µm from the outermost surface of the secondary particle. The term "inner portion" may refer to a region (e.g., of the particle) within about 50 length% to about 70 length% from the center, for example, within about 60 length% from the center with respect to the distance from the center to the surface of the secondary particle, or in some embodiments, a region excluding the region within about 3 µm from the outermost surface of the secondary particle.

In some embodiments, the pores in the inner portion of the secondary particles may have a larger size than the pores in the outer portion thereof. For example, the size of the pores in the inner portion may be about 150 nm to about 1 µm, and the size of the pores in the outer portion may be less than about 150 nm. In this way, when the pore size in the inner portion is larger than the pore size in the outer portion, there may be an advantage of shortening a diffusion distance of lithium in the positive active material and lithium may be easily intercalated from the outside, compared with secondary particles having the same pore sizes in the inner and outer portions, and in addition, there may be an effect of alleviating the volume changes during the charge and discharge. Herein, the pore size refers to an average diameter when a pore is spherical or circular and a length of a long axis when the pore is ellipsoidal and may be measured through an electron micrograph of a cross section of the secondary particle.

The secondary particles may have open pores on the surface. These open pores may have a size of less than about 150 nm, for example, about 10 nm to about 148 nm. The open pores are pores in which some of the walls of the pores are not closed, are formed by the space between the radially oriented plate-shaped primary particles, and are pores deeply connected from the surface of the secondary particles to the central direction. These open pores may be connected to the outside and may become a passageway through which materials can enter and exit. The open pores may be in a form oriented toward the center from the surface of the secondary particles, and may be formed to a depth of, on average, less than or equal to about 150 nm, for example, about 0.001 nm to about 100 nm, for example, about 1 nm to about 50 nm from the surface of the secondary particle. The size and depth of the open pores may be measured by the BJH (Barrett, Joyner and Halenda) method, which is a method derived through the adsorption or desorption content (e.g., amount) of nitrogen.

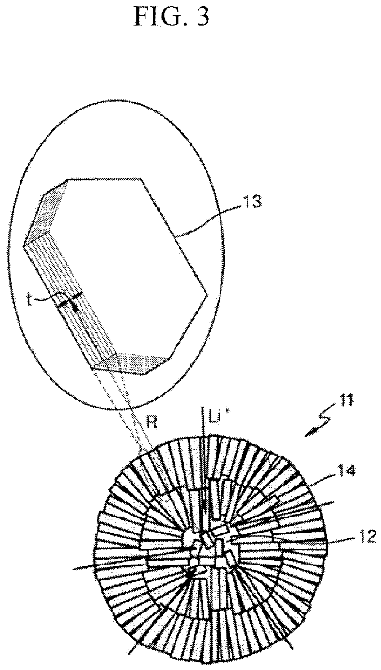

FIG. 3 is a schematic view illustrating a cross-sectional structure of the positive active material secondary particle. Referring to FIG. 3, the secondary particles 11 have an outer portion 14 having a structure in which the primary particles 13 having a plate shape are oriented in a radial direction, and an inner portion 12 in which the primary articles 13 are irregularly oriented. The inner portion 12 may have more empty spaces between the primary particles than the outer portion. In some embodiments, the pore size and porosity in the inner portion are large and shapes thereof are irregular compared with the pore size and porosity in the outer portion. In FIG. 3, arrows indicate the movement direction of lithium ions.

In the secondary particle, the inner portion has a porous structure, so that the diffusion distance of lithium ions to the inner portion is reduced, and in the outer portion, primary particles are radially oriented toward the surface, so that lithium ions are easily intercalated into the surface. In some embodiments, because the size of the primary particles is small, it is easy to secure a lithium transfer path between crystal grains. In some embodiments, because the size of the primary particles is small and the pores between the primary particles alleviate the volume change occurring during charging and discharging, the stress caused by the volume change during charging and discharging may be minimized or reduced. Such a positive active material may reduce resistance of a rechargeable lithium battery and improve capacity characteristics and cycle-life characteristics.

The lithium nickel-based composite oxide is characterized in that it contains at least one element selected from B, Sb, and Nb while containing a high concentration of nickel. For example, the lithium nickel-based composite oxide may be represented by Chemical Formula 1.

**Chemical Formula 1** **Liₓ₁Niₐ₁M¹_{b1}M²_{(1-a1-b1)}O₂**

In Chemical Formula 1, M¹ is at least one element selected from B, Sb, or Nb, and M² is at least one element selected from Al, Ba, Ca, Ce, Cr, Cu, F, Fe, Mg, Mn, Mo, P, S, Si, Sr, Ti, V, W, and Zr, 0.9≤x1≤1.2, 0.8≤a1<1, and 0<b1≤0.2.

In Chemical Formula 1, 0.8≤a1<1, for example, 0.85≤a1<1, 0.9≤a1<1, 0.91 ≤a1<1, or 0.92≤a1≤0.999. In Chemical Formula 1, for example, 0<b1≤0.1, 0<b1≤0.05, or 0.001≤b1≤0.05.

A content (e.g., amount) of at least one element selected from B, Sb, and Nb may be about 0.01 wt% to about 5 wt%, for example, about 0.1 wt% to about 4 wt%, about 0.1 wt% to about 3 wt%, about 0.1 wt% to about 2 wt%, or about 0.5 wt% to about 1.5 wt% based on 100 wt% of the total elements excluding lithium in the lithium nickel-based composite oxide particles.

In some embodiments, a content (e.g., amount) of at least one element selected from B, Sb, or Nb may be about 0.01 mol% to about 3 mol%, for example about 0.1 mol% to about 2.5 mol%, or about 0.1 mol% to about 2 mol% based on 100 mol% of the total elements excluding lithium in the lithium nickel-based composite oxide particles. When the content (e.g., amount) range is satisfied, at least one element selected from B, Sb, and Nb may improve structural stability of the high-nickel-based positive active material, and the size of the primary particles constituting the secondary particles during the high-temperature sintering process may be reduced to increase lithium diffusivity and improve the initial charge/discharge efficiency.

### First Coating Layer

The first coating layer is disposed on the surface of the lithium nickel-based composite oxide particles, and is a layer containing at least one element selected from B, Sb, and Nb.

A thickness of the first coating layer may be less than or equal to about 10 nm or less than or equal to about 5 nm, for example, about 1 nm to about 10 nm, about 1 nm to about 7 nm, or about 2 nm to about 5 nm. Due to formation of such a thin thickness as described above, the first coating layer does not act as a resistance and appropriately controls a growth of primary particles, thereby improving structural stability of the positive active material and improving lithium diffusivity.

The first coating layer may include an oxide of at least one element selected from B, Sb, and Nb; an oxide containing lithium and at least one element selected from B, Sb, and Nb; or a combination thereof. For example, the first coating layer may include boron oxide, lithium boron oxide, antimony oxide, lithium antimony oxide, niobium oxide, lithium niobium oxide, or a combination thereof.

The first coating layer is a layer formed in the process of doping at least one element selected from B, Sb, and Nb. For example, a lithium nickel-based composite oxide may be prepared by mixing a nickel-based composite hydroxide as a precursor of a positive active material; a lithium raw material; and a raw material containing at least one element selected from B, Sb, and Nb and performing heat treatment, in which case a first coating layer may be formed.

### Second Coating Layer

The second coating layer is disposed on the first coating layer, and is a layer containing a metal phosphate. The second coating layer may serve to prevent or reduce the first coating layer, which may become a type or kind of residual lithium and cause a side reaction, from being exposed to the outermost layer of the positive active material.

A thickness of the second coating layer may be less than or equal to about 20 nm, for example, about 1 nm to about 20 nm, about 1 nm to about 18 nm, about 1 nm to about 15 nm, about 1 nm to about 10 nm, about 1 nm to about 7 nm, or about 2 nm to about 5 nm. Due to formation of such a thin thickness as described above, the second coating layer does not act as a resistance and may lower the content (e.g., amount) of residual lithium on the surface and improve the overall performance of the battery.

In the metal phosphate of the second coating layer, the metal may include general metals, transition metals, and semi-metals, for example, at least one element selected from Al, Ba, Ca, Ce, Co, Cr, Cu, Fe, Mg, Mn, Mo, Ni, Si, Sr, Ti, V, W, Zn, and Zr. In one example, the metal may be one or more elements selected from Al and Mg, and in this case, residual lithium may be effectively reduced without deterioration of battery performance.

The metal phosphate may further contain elemental lithium. In this case, the metal phosphate may be expressed as lithium-metal-phosphate. In the second coating layer, metal phosphate and lithium-metal-phosphate may be in a mixed state.

A content (e.g., amount) of the metal phosphate may be about 0.1 wt% to about 3 wt%, for example, about 0.1 wt% to about 2 wt%, or about 0.5 wt% to about 1.5 wt% based on 100 wt% of the total metals excluding lithium in the lithium nickel-based composite oxide particles. In some embodiments, the content (e.g., amount) of the metal phosphate may be about 0.1 mol% to about 3 mol%, for example, about 0.1 mol% to about 2 mol%, or about 0.5 mol% to about 1.5 mol% based on 100 mol% of the total metal excluding lithium in the lithium nickel-based composite oxide particles. When the above content (e.g., amount) range is satisfied, the metal phosphate does not act as a resistance and exists in a very thin thickness on the surface to serve as a type or kind of protective layer.

Residual lithium on the surface of the positive active material is reduced due to the second coating layer, for example, the content (e.g., amount) of residual lithium on the surface of the positive active material may be less than about 0.2 wt%, greater than or equal to about 0.001 wt% and less than about 0.2 wt%, or greater than or equal to about 0.001 wt% and less than or equal to about 0.19 wt% based on 100% by weight of the positive active material. When the content (e.g., amount) of residual lithium in the high nickel-based positive active material is within the above range, side reactions at the interface between the positive electrode and the electrolyte may be suppressed or reduced, thereby improving battery safety.

### Method for Preparing Positive Active Material

In one embodiment, a method for preparing the aforementioned positive active material is provided. For example, a method of preparing a positive active material for a rechargeable lithium battery includes (i) mixing a nickel-based composite hydroxide having a molar content (e.g., amount) of nickel of greater than or equal to about 80 mol% based on the total elements excluding oxygen and hydrogen, a raw material containing at least one element selected from B, Sb, and Nb, and a lithium raw material and performing a first heat treatment to obtain lithium nickel-based composite oxide particles, and (ii) mixing the obtained lithium nickel-based composite oxide particles, a metal raw material, and a phosphorus-based raw material and performing a second heat treatment.

The nickel-based composite hydroxide may be a high nickel-based composite hydroxide, and a molar content (e.g., amount) of nickel may be greater than or equal to about 80 mol%, greater than or equal to about 85 mol%, greater than or equal to about 88 mol%, greater than or equal to about 90 mol%, greater than or equal to about 92 mol%, and less than or equal to about 100 mol% or less than or equal to about 99 mol%, based on 100 wt% of the total elements excluding oxygen and hydrogen in the nickel-based composite hydroxide.

The nickel-based composite hydroxide may be, for example, represented by Chemical Formula 11.

**Chemical Formula 11** **Niₐ₁₁M¹¹_{b11}(OH)₂**

In Chemical Formula 11, M¹¹ is at least one element selected from Al, Ba, Ca, Ce, Cr, Cu, F, Fe, Mg, Mn, Mo, P, S, Si, Sr, Ti, V, W, and Zr, 0.8≤a11≤1, and 0≤ b11≤0.2.

In Chemical Formula 11, for example, 0.8≤a11≤1, 0.85≤a11≤1, 0.9≤a11≤1, 0.91≤a11<1, or 0.92≤a11≤0.999. In Chemical Formula 11, for example, 0≤b11≤0.2, 0 ≤b11≤0.1, 0<b1 ≤0.05, or 0.001≤b11≤0.05.

Based on 100 parts by mole of the total metal of the nickel-based composite hydroxide, about 0.01 parts by mole to about 3 parts by mole of the raw material containing one or more elements selected from B, Sb, and Nb and about 90 parts by mole to about 120 parts by mole of the lithium raw material are mixed. Herein, the content (e.g., amount) of the raw material containing at least one element selected from B, Sb, and Nb may be about 0.01 parts by mole to about 3 parts by mole, for example, about 0.01 parts by mole to about 2 parts by mole, or about 0.1 parts by mole to about 1.5 parts by mole based on 100 mole parts of the total metal of the nickel-based composite hydroxide. When the input content (e.g., amount) range is satisfied, it is possible to synthesize lithium nickel-based composite oxide particles in which the size of the primary particles constituting the secondary particles is appropriately reduced while being structurally stable. The raw material containing one or more elements selected from B, Sb, and Nb may be an oxide containing one or more elements selected from B, Sb, and Nb, for example, B₂O₃, Sb₂O₃, or Nb₂O₅, etc., but is not limited thereto.

The first heat treatment is substantially a high-temperature sintering process for synthesizing the positive active material, and may be performed in a temperature range of about 600 °C to about 1000 °C, for example, about 600 °C to about 900 °C, or about 650 °C to about 800 °C for about 5 hours to about 25 hours.

The lithium nickel-based composite oxide particles obtained after the first heat treatment may be in the form of secondary particles formed by aggregation of a plurality of primary particles, and the average particle diameter of the primary particles may be less than about 200 nm. As described above, by introducing at least one element selected from B, Sb, and Nb as a doping element, the grain growth rate is slowed in the first heat treatment process, and thus the size of the primary particles is reduced to exhibit a size of less than about 200 nm. Because the contents of the primary particles and the secondary particles may each independently be the same as described above, detailed descriptions thereof will not be provided.

The lithium nickel-based composite oxide particles obtained after the first heat treatment include lithium nickel-based composite oxide and are in the form of particles. The particles include a first coating layer on the surface of the particles that contains at least one element selected from B, Sb, and Nb. As described above, the lithium nickel-based composite oxide may be represented by Chemical Formula 1 and/or the like. The content (e.g., amount) of the first coating layer is also the same as described above.

The step (e.g., process act or task) (ii) after the first heat treatment is a process for forming a second coating layer containing a metal phosphate. Based on 100 parts by mole of the total metal excluding lithium in the lithium nickel-based composite oxide, about 0.1 parts by mole to about 3 parts by mole, for example about 0.1 parts by mole to about 2 parts by mole, or about 0.5 parts by mole to about 1.5 parts by mole of each of the metal raw material and the phosphorus-based material may be mixed.

The metal raw material refers to a metal raw material for forming a metal phosphate, wherein the metal may be at least one element selected from Al, Ba, Ca, Ce, Co, Cr, Cu, Fe, Mg, Mn, Mo, Ni, Si, Sr, Ti, V, W, Zn, and Zr as described above.

The second heat treatment may be performed, for example, in a temperature range of about 500 °C to about 700 °C, for example, at about 550 °C to about 650 °C. The second coating layer having a very thin thickness may be stably formed by heat treatment in the above temperature range. The contents of the second coating layer may each independently be the same as described above.

The content (e.g., amount) of residual lithium on the surface of the lithium nickel-based composite oxide particles obtained after the first heat treatment tends to increase due to the introduction of a doping element, and may be for example, greater than or equal to about 0.9 wt% based on 100 wt% of the lithium nickel-based composite oxide. Thereafter, the content (e.g., amount) of residual lithium on the surface of the positive active material particles obtained after the second heat treatment is effectively reduced due to the formation of the second coating layer, and may be for example, less than about 0.2 wt% based on 100 wt% of the positive active material.

### Positive Electrode

In one embodiment, a positive electrode for a rechargeable lithium battery including the aforementioned positive active material is provided. A positive electrode for a rechargeable lithium battery includes a current collector and a positive active material layer disposed on the current collector, and the positive active material layer includes the aforementioned positive active material, and may further include a binder and/or a conductive material.

The binder improves binding properties of positive active material particles with one another and with a current collector and examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but is not limited thereto.

A content (e.g., amount) of the binder in the positive active material layer may be about 1 wt% to about 5 wt% based on the total weight of the positive active material layer.

The conductive material is included to provide electrode conductivity. Any electrically conductive material may be utilized as a conductive material unless it causes a chemical change. Examples of the conductive material may include a carbon-based material such as natural graphite, artificial graphite, carbon black, acetylene black, ketjen black, a carbon fiber, a carbon nanofiber, carbon nanotube, and/or the like; a metal-based material including copper, nickel, aluminium, silver and/or the like in the form of metal powders or metal fibers; a conductive polymer such as a polyphenylene derivative, and/or the like; or a mixture thereof.

In the positive active material layer, a content (e.g., amount) of the conductive material may be about 1 wt% to about 5 wt% based on the total weight of the positive active material layer.

An aluminium foil may be utilized as the positive current collector, but the present disclosure is not limited thereto.

### Rechargeable Lithium Battery

In an embodiment, a rechargeable lithium battery includes a positive electrode including the aforementioned positive active material, a negative electrode, a separator between the positive electrode and the positive electrode, and an electrolyte.

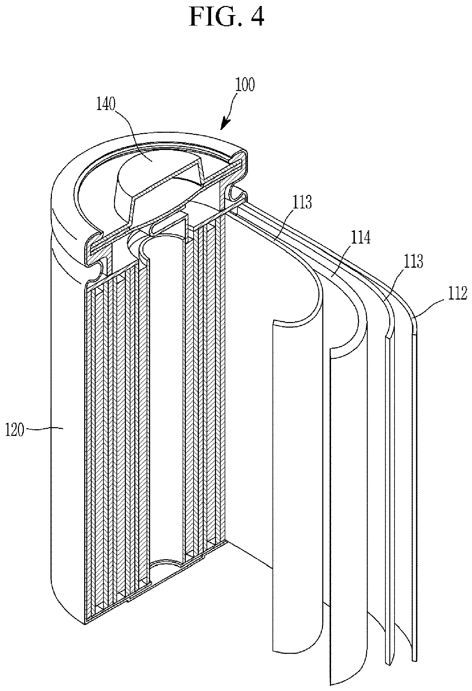

FIG. 4 is a schematic view illustrating a rechargeable lithium battery according to an embodiment. Referring to FIG. 4, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte for a rechargeable lithium battery impregnating the positive electrode 114, the negative electrode 112, and the separator 113, a battery case 120 housing the battery cell, and a sealing member 140 sealing the battery case 120.

### Negative Electrode

The negative electrode for a rechargeable lithium battery includes a current collector and a negative active material layer on the current collector. The negative active material layer includes a negative active material, and may further include a binder and/or a conductive material.

The negative active material may include a material that reversibly intercalates/deintercalates lithium ions, a lithium metal, a lithium metal alloy, a material capable of doping/dedoping lithium, and/or transition metal oxide.

The material that reversibly intercalates/deintercalates lithium ions may include, for example crystalline carbon, amorphous carbon, or a combination thereof as a carbon-based negative active material. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative active material or a Sn-based negative active material. The Si-based negative active material may include silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative active material may include Sn, SnO₂, Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combinations thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, the content (e.g., amount) of silicon may be about 10 wt% to about 50 wt% based on the total weight of the silicon-carbon composite. In some embodiments, the content (e.g., amount) of the crystalline carbon may be about 10 wt% to about 70 wt% based on the total weight of the silicon-carbon composite, and the content (e.g., amount) of the amorphous carbon may be about 20 wt% to about 40 wt% based on the total weight of the silicon-carbon composite. In some embodiments, a thickness of the amorphous carbon coating layer may be about 5 nm to about 100 nm. An average particle diameter (D50) of the silicon particles may be about 10 nm to about 20 µm. The average particle diameter (D50) of the silicon particles may be about 10 nm to about 200 nm. The silicon particles may exist in an oxidized form, and in this case, an atomic content (e.g., amount) ratio of Si:O in the silicon particles indicating a degree of oxidation may be a weight ratio of about 99:1 to about 33:67. The silicon particles may be SiOₓ particles, and in this case, the range of x in SiOₓ may be greater than about 0 and less than about 2. In the present specification, unless otherwise defined, an average particle diameter (D50) indicates a particle where an accumulated volume is about 50 volume% in a particle distribution.

The Si-based negative active material or Sn-based negative active material may be mixed with the carbon-based negative active material. When the Si-based negative active material or Sn-based negative active material and the carbon-based negative active material are mixed and utilized, the mixing ratio may be a weight ratio of about 1:99 to about 90:10.

In the negative active material layer, the negative active material may be included in an amount of about 95 wt% to about 99 wt% based on the total weight of the negative active material layer.

The content (e.g., amount) of the binder in the negative active material layer may be about 1 wt% to about 5 wt% based on the total weight of the negative active material layer. In some embodiments, when the conductive material is further included, the negative active material layer may include about 90 wt% to about 98 wt% of the negative active material, about 1 wt% to about 5 wt% of the binder, and about 1 wt% to about 5 wt% of the conductive material.

The binder serves to well adhere the negative active material particles to each other and also to adhere the negative active material to the current collector. The binder may be a water-insoluble binder, a water-soluble binder, or a combination thereof.

Examples (i.e., non-limiting examples) of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and combinations thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and combinations thereof.

When a water-soluble binder is utilized as the negative electrode binder, a cellulose-based compound capable of imparting viscosity as a type or kind of a thickener may be further included. As the cellulose-based compound, one or more of carboxymethyl cellulose, hydroxypropylmethyl cellulose, methyl cellulose, or alkali metal salts thereof may be mixed and utilized. As the alkali metal, Na, K, or Li may be utilized. The amount of the thickener utilized may be about 0.1 parts by weight to about 3 parts by weight based on 100 parts by weight of the negative active material.

The conductive material is included to provide electrode conductivity. Any electrically conductive material may be utilized as a conductive material unless it causes a chemical change. Examples of the conductive material include a carbon-based material such as natural graphite, artificial graphite, carbon black, acetylene black, ketjen black, a carbon fiber, a carbon nanofiber, carbon nanotube, and/or the like; a metal-based material of a metal powder or a metal fiber including copper, nickel, aluminium, silver, and/or the like; a conductive polymer such as a polyphenylene derivative; or a mixture thereof.

The negative current collector may include one selected from a copper foil, a nickel foil, a stainless steel foil, a titanium foil, a nickel foam, a copper foam, a polymer substrate coated with a conductive metal, and combinations thereof.

### Electrolyte

The electrolyte includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. Examples of the carbonate-based solvent include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. Examples of the ester-based solvent include methyl acetate, ethyl acetate, n-propyl acetate, dimethyl acetate, methyl propionate, ethyl propionate, γ-butyrolactone, decanolide, valerolactone, mevalonolactone, caprolactone, and/or the like. The ether-based solvent may be dibutyl ether, tetraglyme, diglyme, dimethoxyethane, 2-methyltetrahydrofuran, tetrahydrofuran, and/or the like and the ketone-based solvent may be cyclohexanone, and/or the like. In some embodiments, the alcohol-based solvent may be ethyl alcohol, isopropyl alcohol, etc. and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and/or the like.

The non-aqueous organic solvent may be utilized alone or in a mixture. When the non-aqueous organic solvent is utilized in a mixture, the mixture ratio may be controlled or selected in accordance with a desirable battery performance.

In some embodiments, in the case of the carbonate-based solvent, a mixture of a cyclic carbonate and a chain carbonate may be utilized. In this case, when the cyclic carbonate and the chain carbonate are mixed in a volume ratio of about 1:1 to about 1:9, the electrolyte may exhibit excellent or suitable performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

As the aromatic hydrocarbon-based solvent, an aromatic hydrocarbon-based compound represented by Chemical Formula I may be utilized.

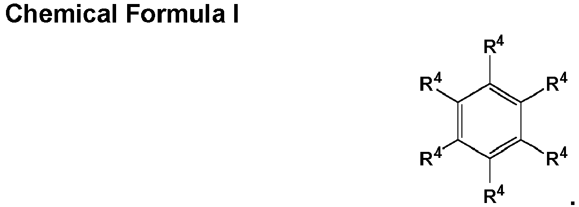

In Chemical Formula I, R⁴ to R⁹ may each independently be the same or different and are selected from hydrogen, a halogen, a C1 to C10 alkyl group, a C1 to C10 haloalkyl group, or a combination thereof.

Specific examples of the aromatic hydrocarbon-based solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The electrolyte may further include vinylene carbonate or an ethylene carbonate-based compound of Chemical Formula II in order to improve cycle-life of a battery.

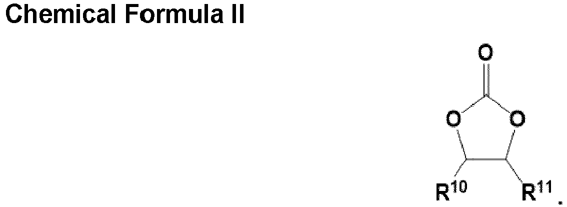

In Chemical Formula II, R¹⁰ and R¹¹ may each independently be the same or different, and are selected from hydrogen, a halogen, a cyano group, a nitro group, and fluorinated C1 to C5 alkyl group, provided that at least one of R¹⁰ and R¹¹ is selected from a halogen, a cyano group, a nitro group, and fluorinated C1 to C5 alkyl group, but both (e.g., simultaneously) of R¹⁰ and R¹¹ are not hydrogen.

Examples of the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate, and/or fluoroethylene carbonate. The amount of the additive for improving cycle-life may be utilized within an appropriate or suitable range.

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide, LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer in a range of 1 to 20, lithium difluoro(bisoxolato) phosphate, LiCl, Lil, LiB(C₂O₄)₂ (lithium bis(oxalato) borate, LiBOB), and/or lithium difluoro(oxalato)borate (LiDFOB).

The lithium salt may be utilized in a concentration in a range of about 0.1 M to about 2.0 M. When the lithium salt is included at the above concentration range, an electrolyte may have excellent or suitable performance and lithium ion mobility due to optimal or suitable electrolyte conductivity and viscosity.

### Separator

The separator 113 separates a positive electrode 114 and a negative electrode 112 and provides a transporting passage for lithium ions and may be any generally-used separator in a lithium ion battery. In other words, the separator may have low resistance to ion transport and excellent or suitable impregnation for an electrolyte. For example, the separator may include a glass fiber, polyester, polyethylene, polypropylene, polytetrafluoroethylene, or a combination thereof and may have a form of a non-woven fabric or a woven fabric. For example, in a lithium ion battery, a polyolefin-based polymer separator such as polyethylene and polypropylene may be mainly utilized. In order to ensure heat resistance or mechanical strength, a coated separator including a ceramic component or a polymer material may be utilized. Optionally, it may have a mono-layered or multi-layered structure.

Rechargeable lithium batteries may be classified as lithium ion batteries, lithium ion polymer batteries, and lithium polymer batteries according to the presence of a separator and the type or kind of electrolyte utilized therein. The rechargeable lithium batteries may have a variety of shapes and sizes, and include cylindrical, prismatic, coin, or pouch-type or kind batteries, and may be thin film batteries or may be rather bulky in size. Structures and manufacturing methods for rechargeable lithium batteries pertaining to this disclosure are well known in the art.

The rechargeable lithium battery according to an embodiment may be utilized in an electric vehicle (EV), a hybrid electric vehicle such as a plug-in hybrid electric vehicle (PHEV), and portable electronic device because it implements a high capacity and has excellent or suitable storage stability, cycle-life characteristics, and high rate characteristics at high temperatures.

Hereinafter, examples of the present disclosure and comparative examples are described. It is to be understood, however, that the examples are for the purpose of illustration and are not to be construed as limiting the present disclosure.

### Example 1

### 1. Preparation of positive active material

### (1) Preparation of nickel-based composite hydroxide

A nickel-based composite hydroxide Ni(OH)₂ was synthesized through a coprecipitation method, which will be described later. A solution in which nickel sulfate (NiSO₄·6H₂O) was dissolved in distilled water solvent as a metal raw material, ammonia water (NH₄OH) for forming a complex compound, and sodium hydroxide (NaOH) as a precipitating agent were prepared.

### [First step: 2.5 kW/m³, NH₄OH 0.40 M, pH 10.5 to 11.5, and reaction time of 6 hours]

First, ammonia water having a concentration of 0.40 M was put in a reactor. While metal raw materials and a complexing agent (NH₄OH) were added thereto respectively at about 85 mL/min and about 10 mL/min at about 50 °C under a stirring power of about 2.5 kW/m³, a reaction was started. While NaOH was added thereto to maintain pH, the reaction was performed for 6 hours. As a result of the reaction, it was confirmed that the average sizes of the obtained core particles were in the range of about 6.5 µm to 7.5 µm, and the second step was performed as follows.

### [Second step: 2.0 kW/m³, NH₄OH 0.45 M, pH 10.5 to 11.5, and reaction time of 18 hours]

The metal raw materials and the complexing agent were added thereto respectively at about 85 mL/min and about 12 mL/min, while the reaction temperature was maintained at about 50 °C, so that a concentration of the complexing agent was maintained to be about 0.45 M. While adding NaOH thereto in order to maintain pH, the reaction was performed for about 18 hours. At this time, the stirring power was lowered to about 2.0 kW/m³, which was lower than the first step, and the reaction proceeded. By performing this reaction, it was confirmed that the average sizes of the product particles containing the core and the intermediate layer were about 13.5 µm to about 14 µm, and the third step was performed as follows.

### [Third step: 1.5 kW/m³, NH₄OH 0.45 M, pH 10.5 to 11.5, and reaction time of 14 hours]

While maintaining the reaction temperature of about 50 °C, input rates of the metal raw materials and the complexing agent and the concentration of the complexing agent were the same as in the second step. While adding NaOH thereto in order to maintain pH, the reaction was performed for about 14 hours. At this time, the stirring power was lowered to about 1.5 kW/m³, which was lower than in the second step, and the reaction proceeded.

### Post-process

After washing the resultant, the washed resultant was dried with hot air at about 150 °C for about 24 hours to obtain a nickel-based composite hydroxide Ni(OH)₂.

### (2) Preparation of Positive Active Material

B₂O₃, which was prepared to have 1 part by mole of boron based on about 100 parts by mole of nickel of the obtained Ni(OH)₂, and lithium hydroxide, which was prepared to have 100 part by mole of lithium based on about 100 parts by mole of nickel of the obtained Ni(OH)₂ were mixed with the obtained Ni(OH)₂ and then, put in a furnace to perform a first heat treatment under an oxygen atmosphere at about 700 °C for about 10 hours. Accordingly, an intermediate (B-LMO) in which a boron-containing first coating layer was formed on the surface of boron-doped lithium nickel-based composite oxide particles was obtained.

The intermediate was dispersed in ethanol. After dissolving Al(NO₃)₃·9H₂O and (NH₄)₂HPO₄ in about 5 mL of distilled water to have about 1 part by mole of AlPO₄ based on about 100 parts by mole of nickel of the intermediate, the solution was added to the ethanol dispersion, and the solvent was evaporated therefrom. Subsequently, a second heat treatment was performed at about 600 °C. Accordingly, an aluminium phosphate-containing second coating layer was formed on the surface of the first coating layer.

### 2. Manufacture of Rechargeable Lithium Battery Cell

About 95 wt% of the prepared positive active material, about 3 wt% of a polyvinylidene fluoride binder, and about 2 wt% of carbon nanotube conductive material were mixed in an N-methylpyrrolidone solvent to prepare positive active material slurry. The positive active material slurry was applied to an aluminium current collector, dried, and then compressed to manufacture a positive electrode.

A coin half-cell was manufactured by disposing a separator having a polyethylene polypropylene multilayer structure between the manufactured positive electrode and lithium metal counter electrode, and injecting an electrolyte solution in which about 1.0 M LiPF₆ lithium salt was added to a solvent in which ethylene carbonate and diethyl carbonate were mixed in a volume ratio of about 50:50.

### Example 2

A positive active material and a coin half-cell were prepared in substantially the same manner as in Example 1 except that the positive active material was prepared by utilizing Sb₂O₃ instead of B₂O₃ and adding about 1 part by mole of antimony (Sb) based on about 100 parts by mole of nickel of Ni(OH)₂ to prepare an intermediate in which a Sb-containing first coating layer was formed on the surface of Sb-doped lithium nickel-based composite oxide particles.

### Example 3

A positive active material and a coin half-cell were prepared in substantially the same manner as in Example 1 except that the positive active material was prepared by utilizing Nb₂O₅ instead of B₂O₃ and adding about 1 part by mole of niobium (Nb) based on about 100 parts by mole of nickel of Ni(OH)₂ to prepare an intermediate in which a Nb-containing first coating layer was formed on the surface of Nb-doped lithium nickel-based composite oxide particles.

### Comparative Example 1

A positive active material and a coin half-cell were prepared in substantially the same manner as in Example 1 except that the positive active material was prepared by utilizing no B₂O₃ and coating no AlPO₄, that is, LiNiO₂ itself was utilized as the positive active material.

### Comparative Example 2

A positive active material and a coin half-cell were prepared in substantially the same manner as in Example 1 except that the positive active material was prepared by performing no AlPO₄ coating, that is, forming a boron-containing first coating layer on the surface of boron-doped lithium nickel-based composite oxide particles.

### Comparative Example 3

A positive active material and a coin half-cell were prepared in substantially the same manner as in Example 1 except that the positive active material was prepared by utilizing no B₂O₃, that is, forming an AlPO₄-containing second coating layer alone on the surface of LiNiO₂.

### Comparative Example 4

A positive active material and a coin half-cell were prepared in substantially the same manner as in Example 1 except that the positive active material was prepared by utilizing aluminium nitrate instead of B₂O₃ but performing no AlPO₄ coating, that is, forming an Al-containing first coating layer alone on the surface of Al-doped nickel-based composite oxide particles.

### Evaluation Example 1: Confirmation of First Coating Layer and Second Coating Layer

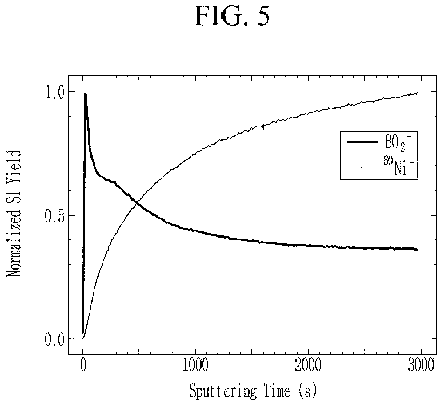

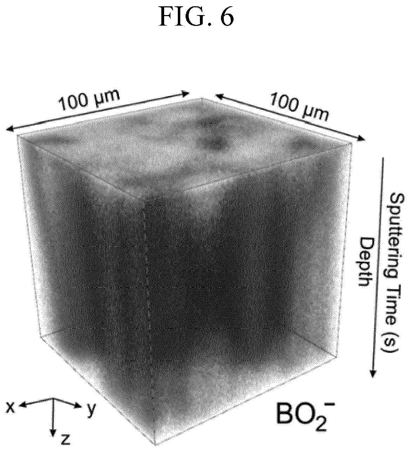

A TOF-SIMS (time-of-flight secondary ion mass spectrometry) depth profile analysis was performed with respect to the intermediate (B-LMO) of Example 1 to analyze concentrations of Ni- and BO₂⁻ according to a depth from the particle surface to the inside, and the results are shown in FIG. 5. An image mapping the concentration of BO₂⁻ ions through the analysis of FIG. 5 is shown in FIG. 6. Referring to FIG. 5, a boron-containing first coating layer with a thickness of less than about 5 nm was formed on the particle surface. FIG. 6 shows that the compound on the particle surface contains the BO₂⁻ ions. The first coating layer is understood to include lithium-boron-oxide (LiₓBO_{y}), which is believed to increase residual lithium.

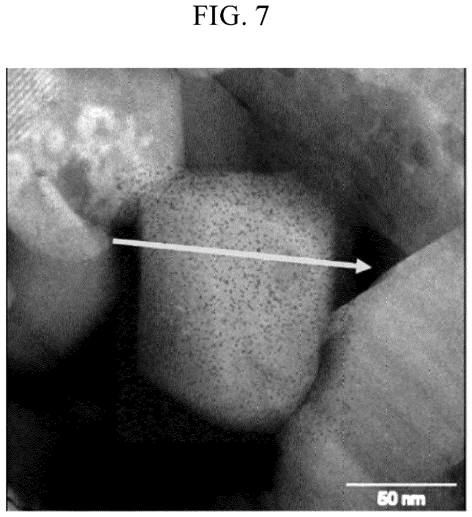

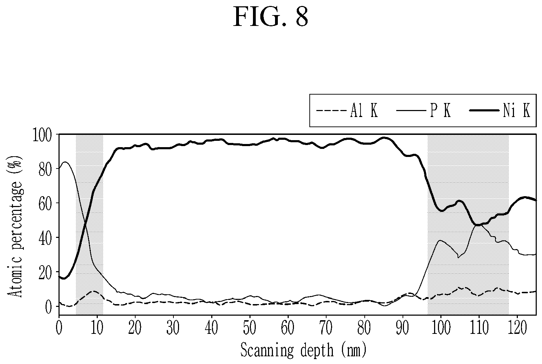

An SEM-EDS (Scanning Electron Microscope - Energy Dispersive X-ray Spectrometry) analysis was performed with respect to the final positive active material of Example 1 to obtain an image mapping Al, P, and Ni elements, which is shown in FIG. 7. The linear scanning result in an arrow direction in FIG. 7 is shown in FIG. 8. Referring to FIG. 8, Ni was located in the center, while Al and P were respectively located on the outer surface, which shows that an AlPO₄-containing second coating layer with a thickness of about 20 nm was formed on the outermost surface of the active material.

### Evaluation Example 2: Confirmation of Change in Size of Primary Particles

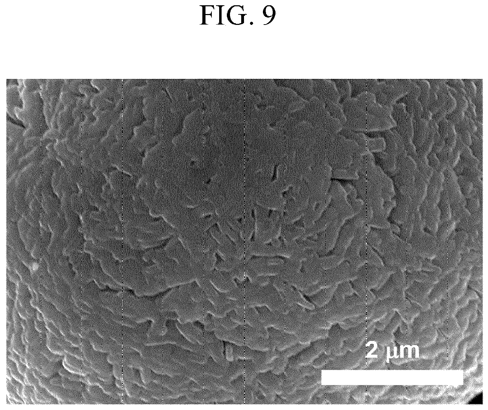

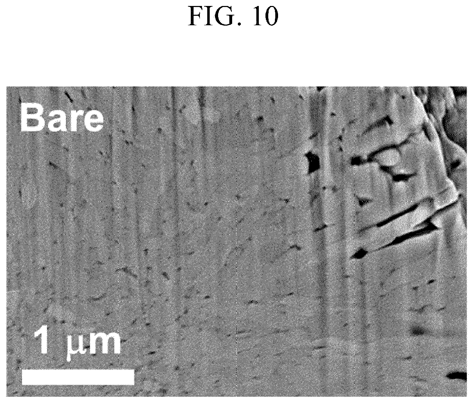

A scanning electron microscope (SEM) image of the surface of the positive active material prepared in Comparative Example 1 is shown in FIG. 9, and an SEM image of a cross section of the positive active material prepared in Comparative Example 1 is shown in FIG. 10.

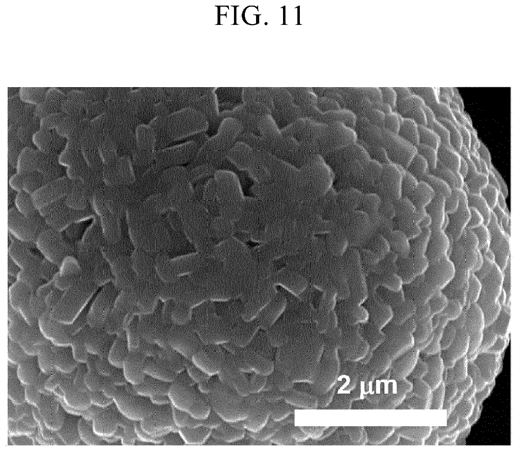

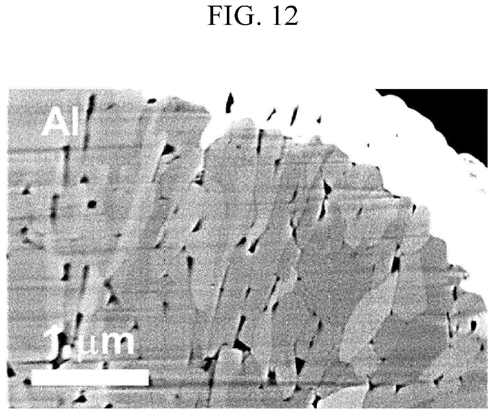

The SEM image of the surface of the positive active material prepared in Comparative Example 4 is shown in FIG. 11, and the SEM image of the cross section of the positive active material prepared in Comparative Example 4 is shown in FIG. 12.

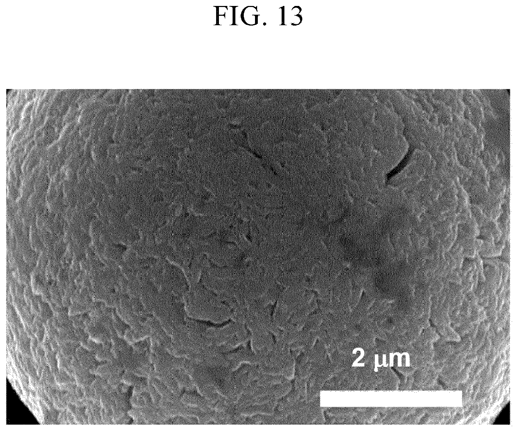

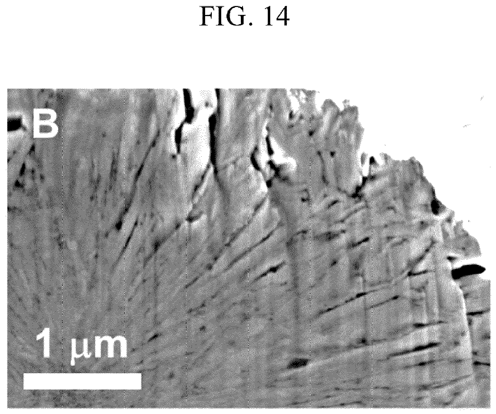

The SEM image of the surface of the intermediate (B-LNO) of the positive active material prepared in Example 1 is shown in FIG. 13, and the SEM image of the cross section of the intermediate of the positive active material prepared in Example 1 is shown in FIG. 14.

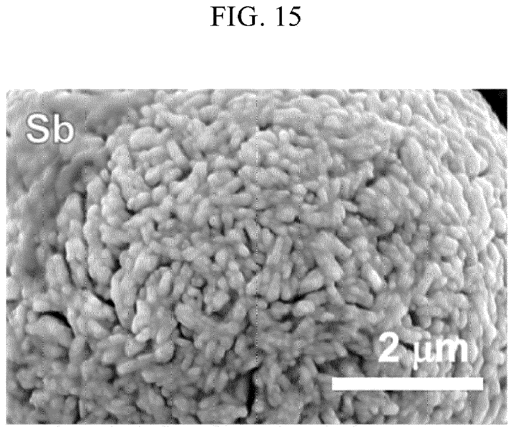

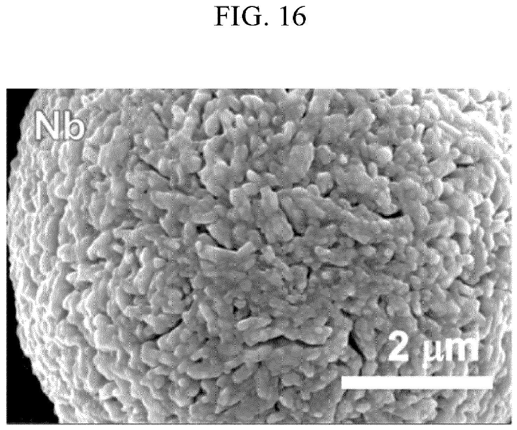

An SEM image of the surface of the intermediate (Sb-LNO) of the positive active material prepared in Example 2 is shown in FIG. 15. Finally, the SEM image of the surface of the intermediate (Nb-LNO) of the positive active material prepared in Example 3 is shown in FIG. 16.

Compared with the images of Comparative Example 1 in FIGS. 9 and 10, the images of Comparative Example 4 in FIGS. 11 and 12 showed that a particle size (e.g., an average particle size or diameter) of the primary particles was increased by the Al doping.

In contrast to Comparative Example 4, Example 1 in FIGS. 13 and 14, Example 2 in FIG. 15, and Example 3 in FIG. 16 showed that a particle size (e.g., an average particle size or diameter) of the primary particles was reduced by each of the B doping, the Sb doping, and the Nb doping as compared with Comparative Example 1. Here, the doping elements appropriately inhibit growth of the primary particles during the first heat treatment. As such, when the size of the primary particle is reduced, a lithium diffusion path is shortened, reducing resistance but improving initial charge/discharge efficiency, which is analyzed in Evaluation Example 4 (e.g., 90.5% versus 89.9%).

### Evaluation Example 3: Evaluation of Residual Lithium

The positive active materials of Comparative Examples 1 and 4 and the positive active material intermediates of Examples 1 to 3 were evaluated with respect to a content (e.g., amount) of unreacted residual lithium on the surface, and the results are shown in Table 1.

The content (e.g., amount) of residual lithium is measured in the following method. About 10 g of each positive active material (or intermediate) was put in about 100 mL of distilled water and then, stirred at about 300 rpm for about 30 minutes, and while adding HCl thereto, pH changes thereof were measured. For example, when the residual lithium exists in the form of Li₂CO₃, LiOH, and/or the like, when HCl was added thereto, H⁺ and CO₃²⁻, or H⁺ and OH- react, performing titration. The content (e.g., amount) of HCl added until the titration was completed was measured to calculate an amount of the residual lithium. Herein, a unit ppm is based on weight. For example, 4000 ppm means 0.4 wt% based on about 100 wt% of a positive active material (or intermediate).

**(Table 1)**

| | Content of residual lithium (ppm) |
|---|---|
| Comparative Example 1 (LNO) | 4103 |
| Comparative Example 4 (Al-LNO) | 3904 |
| Example 1 (B-LNO) | 9314 |
| Example 2 (Sb-LNO) | ∼6000 |
| Example 3 (Nb-LNO) | ∼6000 |

Referring to Table 1, as shown in Comparative Example 4, when the size of the primary particle was increased by the Al doping, the residual lithium was reduced, but as shown in Examples 1 to 3, when the size of the primary particle was reduced by the B, Sb, or Nb doping, the residual lithium tends to increase. Accordingly, the examples show that reducing the size of the primary particles improves initial charge/discharge efficiency but increases the residual lithium and thus increases a side reaction and gas generation, which deteriorates battery stability at a high voltage.

Therefore, an embodiment, by doping B, Sb, and/or Nb and then, coating metal phosphate, succeeds in improving battery performance without increasing resistance or deteriorating capacity, while reducing residual lithium. In Examples 1 to 3, the final positive active materials were measured with respect to a residual lithium content (e.g., amount) in substantially the same manner as above, and the results are shown in Table 2.

**(Table 2)**

| | Content of residual lithium (ppm) |
|---|---|
| Comparative Example 1 (LNO) | 4103 |
| Comparative Example 4 (Al-LNO) | 3904 |
| Example 1 (AlPO₄-B-LNO) | 1710 |
| Example 2 (AlPO₄-Sb-LNO) | 1800 |
| Example 3 (AlPO₄-Nb-LNO) | 1790 |

Referring to Table 2, Examples 1 to 3 showed that the residual lithium contents on the surface were reduced to less than 2000 ppm after forming a metal phosphate-containing second coating layer. Accordingly, in the positive active materials of the examples, the size of primary particles was reduced due to the doping, improving initial charge/discharge efficiency of a battery, and concurrently (e.g., simultaneously), the residual lithium content (e.g., amount) was reduced by the second coating layer, improving high voltage stability.

### Evaluation Example 4: Evaluation of Electrical Performance

The coin half-cells of Example 1 and Comparative Examples 1 to 4 were charged at about 0.2 C from about 3.0 V up to about 4.35 V (vs. Li/Li⁺), paused for about 10 minutes, and discharged at about 0.2 C to about 3.0 V at room temperature for initial charge and discharge. Herein, initial discharge capacity of the cells was measured, and the results are shown in Table 3, and a ratio of initial discharge capacity to the initial charge capacity was calculated as initial efficiency, and the results are shown in Table 3.

Subsequently, the cells were 50 times repetitively charged and discharged at about 1 C within a range of about 3.0 V to about 4.35 V at room temperature. A ratio of discharge capacity at the 50^{th} cycle to the initial discharge capacity was obtained as 50th cycle-life, and the results are shown in Table 3.

**(Table 3)**

| | Examp le 1 (AlPO₄ -B-LNO) | Comparat ive Example 1 (LNO) | Comparat ive Example 2 (B-LNO) | Comparat ive Example 3 (AlPO₄-LNO) | Comparat ive Example 4 (Al-LNO) |
|---|---|---|---|---|---|
| Residual lithium (ppm) | 1710 | 4103 | 9314 | 2562 | 3904 |
| Upper limit voltage (V) | 4.35 | 4.35 | 4.35 | 4.35 | 4.35 |
| Initial discharge capacity (mAh/g) | 233.2 | 231.2 | 223.7 | 216.6 | 229.3 |
| Initial efficiency (%) | 90.5 | 90.3 | 88.4 | 84.6 | 89.9 |
| 50th cycle-life (%) | 91.5 | 85.1 | 90.8 | 75.2 | 88.8 |

Referring to Table 3, Comparative Example 1 in which doping and coating were not performed, showed significantly low cycle-life characteristics, Comparative Example 2, in which boron doping alone was performed, showed slightly deteriorated initial efficiency and cycle-life characteristics and, as described above, high residual lithium and thus a high voltage safety problem.

Comparative Example 3, in which metal phosphate coating alone was performed without boron doping and/or the like, showed reduced residual lithium due to the coating but no doping effect and thus deteriorated initial efficiency and also, deteriorated cycle-life characteristics due to the coating layer serving as resistance. In some embodiments, Comparative Example 4, in which aluminium doping alone was performed, showed slightly deteriorated initial efficiency and cycle-life characteristics, as described above, due to the increased sizes of the primary particles, compared with Example 1.

On the other hand, in the case of Example 1, high voltage safety was ensured as the content (e.g., amount) of residual lithium was very low at a level of less than about 2000 ppm, the initial capacity was high, and the initial charge/discharge efficiency and cycle-life characteristics were both (e.g., simultaneously) improved.

While this present disclosure has been described in connection with what is presently considered to be practical example embodiments, it is to be understood that the present disclosure is not limited to the disclosed embodiments. In contrast, it is intended to cover one or more suitable modifications and equivalent arrangements included within the scope of the claims.

As used herein, the term "substantially," "about," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

As used herein, the terms "use," "using," and "used" may be considered synonymous with the terms "utilize," "utilizing," and "utilized," respectively.

The use of "may" when describing embodiments of the present disclosure refers to "one or more embodiments of the present disclosure."

As used herein, the singular forms "a", "an" and "the" are intended to include the plural forms as well, unless the context clearly indicates otherwise.

In the present disclosure, when particles are spherical, "size" or "diameter" indicates an average particle diameter, and when the particles are non-spherical, the "size" or "diameter" indicates a major axis length. That is, when particles are spherical, "diameter" indicates an average particle diameter, and when the particles are non-spherical, the "diameter" indicates a major axis length. The size or diameter of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter (or size) is referred to as D50. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

The vehicle, a battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

### Description of Symbols

| | | | |
|---|---|---|---|
| 11 | secondary particle | | |
| 12 | inner portion of secondary particle | | |
| 13 | primary particle | | |
| 14 | outer portion of secondary particle | | |
| 100 | rechargeable lithium battery | 112 | negative electrode |
| 113 | separator | 114 | positive electrode |
| 120 | battery case | 140 | sealing member |

The present invention can also be defined by reference to the following clauses:
Clause 1. A positive active material for a rechargeable lithium battery, the positive active material comprising:
   lithium nickel-based composite oxide particles having a molar content of nickel greater than or equal to about 80 mol% based on the total elements excluding lithium and oxygen and containing at least one of B, Sb, or Nb;
   a first coating layer on a surface of the lithium nickel-based composite oxide particles and containing at least one of B, Sb, or Nb; and
   a second coating layer on the first coating layer and containing a metal phosphate.
Clause 2. The positive active material of clause 1, wherein
   the lithium nickel-based composite oxide particles comprise cobalt-free layered lithium nickel-based composite oxide.
Clause 3. The positive active material of clause 1 or clause 2, wherein
   the lithium nickel-based composite oxide particles comprise secondary particles each formed by aggregation of a plurality of primary particles, and
   an average particle size of the primary particles is less than about 200 nm.
Clause 4. The positive active material of clause 3, wherein
   an average particle size of the secondary particles is about 5 µm to about 25 µm.
Clause 5. The positive active material of any one of clauses 1 to 4, wherein
   the lithium nickel-based composite oxide particles are in a form of secondary particles in each of which a plurality of primary particles are aggregated, and at least a portion of the primary particles are radially oriented.
Clause 6. The positive active material of clause 5, wherein
   the secondary particles each comprise an inner portion having an irregular porous structure and an outer portion having a radially oriented structure as a region around the inner portion.
Clause 7. The positive active material of clause 5 or clause 6, wherein
   at least a portion of the primary particles have a plate shape, and each of the secondary particles comprises open pores on the surface thereof, wherein the open pores are formed by the space between the plate-shaped primary particles oriented in a radial direction, and the pores are directed toward the center from the surface of the corresponding secondary particle.
Clause 8. The positive active material of any one of clauses 1 to 7, wherein
   the lithium nickel-based composite oxide particles comprise a compound represented by Chemical Formula 1:

   Chemical Formula 1 Liₓ₁Niₐ₁M¹_{b1}M²_{(1-a1-b1)}O₂

   wherein, in Chemical Formula 1, M¹ is at least one of B, Sb, or Nb, and M² is at least one of Al, Ba, Ca, Ce, Cr, Cu, F, Fe, Mg, Mn, Mo, P, S, Si, Sr, Ti, V, W, or Zr, 0.9 ≤x1≤1.2, 0.8≤a1<1, and 0<b1≤0.2.
Clause 9. The positive active material of any one of clauses 1 to 8, wherein
   a content of at least one of B, Sb, or Nb is about 0.01 wt% to about 5 wt% based on 100 wt% of the total metals excluding lithium in the lithium nickel-based composite oxide particles.
Clause 10. The positive active material of any one of clauses 1 to 9, wherein a thickness of the first coating layer is about 1 nm to about 10 nm.
Clause 11. The positive active material of any one of clauses 1 to 10, wherein the first coating layer comprises:
   an oxide of at least one of B, Sb, or Nb; and/or
   an oxide containing lithium and at least one of B, Sb, or Nb.
Clause 12. The positive active material of any one of clauses 1 to 11, wherein a thickness of the second coating layer is about 1 nm to about 20 nm.
Clause 13. The positive active material of any one of clauses 1 to 12, wherein
   the metal in the metal phosphate of the second coating layer is at least one of Al, Ba, Ca, Ce, Co, Cr, Cu, Fe, Mg, Mn, Mo, Ni, Si, Sr, Ti, V, W, Zn, or Zr.
Clause 14. The positive active material of clause 13, wherein
   the metal is at least one of Al or Mg.
Clause 15. The positive active material of any one of clauses 1 to 14, wherein
   a content of the metal phosphate is about 0.1 wt% to about 3 wt% based on 100 wt% of the total metals excluding lithium in the lithium nickel-based composite oxide particles.
Clause 16. The positive active material of any one of clauses 1 to 15, wherein
   a content of residual lithium on the surface of the lithium nickel-based composite oxide particles based on 100 wt% of the positive active material in a rechargeable lithium battery is less than about 0.2 wt%.
Clause 17. A method of preparing a positive active material for a rechargeable lithium battery, the method comprising:
   mixing a nickel-based composite hydroxide having a molar content of nickel greater than or equal to about 80 mol% based on the total elements excluding oxygen and hydrogen, a raw material containing at least one of B, Sb, or Nb, and a lithium raw material;
   performing a first heat treatment to obtain lithium nickel-based composite oxide particles;
   mixing the obtained lithium nickel-based composite oxide particles, a metal raw material, and a phosphorus-based raw material; and
   performing a second heat treatment.
Clause 18. The method of clause 17, wherein
   the nickel-based composite hydroxide is represented by Chemical Formula 11:

   Chemical Formula 11 Niₐ₁₁M¹¹_{b11}(OH)₂

   wherein, in Chemical Formula 11, M¹¹ is at least one of Al, Ba, Ca, Ce, Cr, Cu, F, Fe, Mg, Mn, Mo, P, S, Si, Sr, Ti, V, W, or Zr, 0.8≤a11<1, and 0<b11≤0.2.
Clause 19. The method of clause 17 or clause 18, wherein
   based on 100 parts by mole of the total metals of the nickel-based composite hydroxide,
   about 0.01 parts by mole to about 3 parts by mole of the raw material containing at least one B, Sb, or Nb is mixed, and
   about 90 parts by mole to about 120 parts by mole of the lithium raw material is mixed.
Clause 20. The method of any one of clauses 17 to 19, wherein
   the first heat treatment is performed in a temperature range of about 600 °C to about 1000 °C.
Clause 21. The method of any one of clauses 17 to 20, wherein
   the lithium nickel-based composite oxide particles obtained after the first heat treatment are in the form of secondary particles each formed by aggregation of a plurality of primary particles, and an average particle size of the plurality of primary particles is less than about 200 nm.
Clause 22. The method of any one of clauses 17 to 21, wherein
   the lithium nickel-based composite oxide particles obtained after the first heat treatment comprise
   a first coating layer on the surface of the lithium nickel-based composite oxide particles and containing at least one of B, Sb, or Nb,
   wherein a thickness of the first coating layer is about 1 nm to about 10 nm.
Clause 23. The method of clause 22, wherein
   the first coating layer comprises:
   an oxide of at least one of B, Sb, or Nb; and/or
   an oxide containing lithium and at least one of B, Sb, or Nb.
Clause 24. The method of any one of clauses 17 to 23, wherein
   based on 100 parts by mole of the total metals excluding lithium in the lithium nickel-based composite oxide,
   about 0.1 parts by mole to about 3 parts by mole of each of the metal raw material and the phosphorus-based material are mixed.
Clause 25. The method of any one of clauses 17 to 24, wherein
   the metal raw material is a compound containing at least of Al, Ba, Ca, Ce, Co, Cr, Cu, Fe, Mg, Mn, Mo, Ni, Si, Sr, Ti, V, W, Zn, or Zr.
Clause 26. The method of any one of clauses 17 to 25, wherein
   the second heat treatment is performed in a temperature range of about 500 °C to about 700 °C.
Clause 27. The method of any one of clauses 17 to 26, wherein
   through the second heat treatment, a positive active material for a rechargeable lithium battery comprising the lithium nickel-based composite oxide particles obtained in the first heat treatment and a second coating layer located on a surface of the lithium nickel-based composite oxide particles and containing a metal phosphate is obtained, and
   wherein a thickness of the second coating layer is about 1 nm to about 20 nm.
Clause 28. The method of any one of clauses 17 to 27, wherein
   a content of residual lithium on the surface of the lithium nickel-based composite oxide particles obtained after the first heat treatment is greater than or equal to about 0.9 wt% based on 100 wt% of the lithium nickel-based composite oxide, and
   a content of residual lithium on the surface of the positive active material particles obtained after the second heat treatment is less than about 0.2 wt% based on 100 wt% of the positive active material.
Clause 29. A rechargeable lithium battery, comprising
   a positive electrode comprising the positive active material of any one of clauses 1 to 16,
   a negative electrode, and
   an electrolyte.

## Claims

1. A positive active material for a rechargeable lithium battery, the positive active material comprising:
lithium nickel-based composite oxide particles having a molar content of nickel greater than or equal to about 80 mol% based on the total elements excluding lithium and oxygen and containing at least one of B, Sb, or Nb;
a first coating layer on a surface of the lithium nickel-based composite oxide particles and containing at least one of B, Sb, or Nb; and
a second coating layer on the first coating layer and containing a metal phosphate.

2. The positive active material of claim 1, wherein
the lithium nickel-based composite oxide particles comprise cobalt-free layered lithium nickel-based composite oxide.

3. The positive active material of claim 1 or claim 2, wherein
the lithium nickel-based composite oxide particles comprise secondary particles each formed by aggregation of a plurality of primary particles, and
an average particle size of the primary particles is less than about 200 nm, optionally wherein:
an average particle size of the secondary particles is about 5 µm to about 25 µm.

4. The positive active material of any one of claims 1 to 3, wherein:
(i) the lithium nickel-based composite oxide particles are in a form of secondary particles in each of which a plurality of primary particles are aggregated, and at least a portion of the primary particles are radially oriented, optionally wherein
the secondary particles each comprise an inner portion having an irregular porous structure and an outer portion having a radially oriented structure as a region around the inner portion; and/or
(ii) at least a portion of the primary particles have a plate shape, and each of the secondary particles comprises open pores on the surface thereof, wherein the open pores are formed by the space between the plate-shaped primary particles oriented in a radial direction, and the pores are directed toward the center from the surface of the corresponding secondary particle.

5. The positive active material of any one of claims 1 to 4, wherein:
(i) the lithium nickel-based composite oxide particles comprise a compound represented by Chemical Formula 1:
Chemical Formula 1 Liₓ₁Niₐ₁M¹_{b1}M²_{(1-a1-b1)}O₂
wherein, in Chemical Formula 1, M¹ is at least one of B, Sb, or Nb, and M² is at least one of Al, Ba, Ca, Ce, Cr, Cu, F, Fe, Mg, Mn, Mo, P, S, Si, Sr, Ti, V, W, or Zr, 0.9 ≤x1≤1.2, 0.8≤a1<1, and 0<b1≤0.2; and/or
(ii) a content of at least one of B, Sb, or Nb is about 0.01 wt% to about 5 wt% based on 100 wt% of the total metals excluding lithium in the lithium nickel-based composite oxide particles.

6. The positive active material of any one of claims 1 to 5, wherein:
(i) a thickness of the first coating layer is about 1 nm to about 10 nm; and/or
(ii) the first coating layer comprises: an oxide of at least one of B, Sb, or Nb; an oxide containing lithium and at least one of B, Sb, or Nb; or a combination thereof; and/or
(iii) a thickness of the second coating layer is about 1 nm to about 20 nm.

7. The positive active material of any one of claims 1 to 6, wherein
the metal in the metal phosphate of the second coating layer is at least one of Al, Ba, Ca, Ce, Co, Cr, Cu, Fe, Mg, Mn, Mo, Ni, Si, Sr, Ti, V, W, Zn, or Zr, optionally wherein:
the metal is at least one of Al or Mg.

8. The positive active material of any one of claims 1 to 7, wherein:
(i) a content of the metal phosphate is about 0.1 wt% to about 3 wt% based on 100 wt% of the total metals excluding lithium in the lithium nickel-based composite oxide particles; and/or
(ii) a content of residual lithium on the surface of the lithium nickel-based composite oxide particles based on 100 wt% of the positive active material in a rechargeable lithium battery is less than about 0.2 wt%.

9. A method of preparing a positive active material for a rechargeable lithium battery, the method comprising:
mixing a nickel-based composite hydroxide having a molar content of nickel greater than or equal to about 80 mol% based on the total elements excluding oxygen and hydrogen, a raw material containing at least one of B, Sb, or Nb, and a lithium raw material;
performing a first heat treatment to obtain lithium nickel-based composite oxide particles;
mixing the obtained lithium nickel-based composite oxide particles, a metal raw material, and a phosphorus-based raw material; and
performing a second heat treatment.

10. The method of claim 9, wherein:
(i) the nickel-based composite hydroxide is represented by Chemical Formula 11:
Chemical Formula 11 Niₐ₁₁M¹¹_{b11}(OH)₂
wherein, in Chemical Formula 11, M¹¹ is at least one of Al, Ba, Ca, Ce, Cr, Cu, F, Fe, Mg, Mn, Mo, P, S, Si, Sr, Ti, V, W, or Zr, 0.8≤a11≤1, and 0≤b11≤0.2; and/or
(ii) based on 100 parts by mole of the total metals of the nickel-based composite hydroxide,
about 0.01 parts by mole to about 3 parts by mole of the raw material containing at least one B, Sb, or Nb is mixed, and
about 90 parts by mole to about 120 parts by mole of the lithium raw material is mixed.

11. The method of claim 9 or claim 10, wherein:
(i) the first heat treatment is performed in a temperature range of about 600 °C to about 1000 °C; and/or
(ii) the lithium nickel-based composite oxide particles obtained after the first heat treatment are in the form of secondary particles each formed by aggregation of a plurality of primary particles, and an average particle size of the plurality of primary particles is less than about 200 nm.

12. The method of any one of claims 9 to 11, wherein:
the lithium nickel-based composite oxide particles obtained after the first heat treatment comprise
a first coating layer on the surface of the lithium nickel-based composite oxide particles and containing at least one of B, Sb, or Nb,
wherein a thickness of the first coating layer is about 1 nm to about 10 nm, optionally wherein:
the first coating layer comprises:
an oxide of at least one of B, Sb, or Nb; and/or
an oxide containing lithium and at least one of B, Sb, or Nb.

13. The method of any one of claims 9 to 12, wherein:
(i) based on 100 parts by mole of the total metals excluding lithium in the lithium nickel-based composite oxide,
about 0.1 parts by mole to about 3 parts by mole of each of the metal raw material and the phosphorus-based material are mixed; and/or
(ii) the metal raw material is a compound containing at least of Al, Ba, Ca, Ce, Co, Cr, Cu, Fe, Mg, Mn, Mo, Ni, Si, Sr, Ti, V, W, Zn, or Zr; and/or
(iii) the second heat treatment is performed in a temperature range of about 500 °C to about 700 °C.

14. The method of any one of claims 9 to 13, wherein:
(i) through the second heat treatment, a positive active material for a rechargeable lithium battery comprising the lithium nickel-based composite oxide particles obtained in the first heat treatment and a second coating layer located on a surface of the lithium nickel-based composite oxide particles and containing a metal phosphate is obtained, and
wherein a thickness of the second coating layer is about 1 nm to about 20 nm; and/or
(ii) a content of residual lithium on the surface of the lithium nickel-based composite oxide particles obtained after the first heat treatment is greater than or equal to about 0.9 wt% based on 100 wt% of the lithium nickel-based composite oxide, and
a content of residual lithium on the surface of the positive active material particles obtained after the second heat treatment is less than about 0.2 wt% based on 100 wt% of the positive active material.

15. A rechargeable lithium battery, comprising
a positive electrode comprising the positive active material of any one of claims 1 to 8,
a negative electrode, and
an electrolyte.

## Amended claims

### Amended claims in accordance with Rule 137(2) EPC.

1. A positive active material for a rechargeable lithium battery, the positive active material comprising:
lithium nickel-based composite oxide particles having a molar content of nickel greater than or equal to about 80 mol% based on the total elements excluding lithium and oxygen and containing at least one of B, Sb, or Nb;
a first coating layer on a surface of the lithium nickel-based composite oxide particles and containing at least one of B, Sb, or Nb; and
a second coating layer on the first coating layer and containing a metal phosphate; wherein
the lithium nickel-based composite oxide particles comprise cobalt-free layered lithium nickel-based composite oxide.

2. The positive active material of claim 1, wherein
the lithium nickel-based composite oxide particles comprise secondary particles each formed by aggregation of a plurality of primary particles, and
an average particle size of the primary particles is less than about 200 nm, optionally wherein:
an average particle size of the secondary particles is about 5 µm to about 25 µm.

3. The positive active material of claim 1 or claim 2, wherein:
(i) the lithium nickel-based composite oxide particles are in a form of secondary particles in each of which a plurality of primary particles are aggregated, and at least a portion of the primary particles are radially oriented, optionally wherein
the secondary particles each comprise an inner portion having an irregular porous structure and an outer portion having a radially oriented structure as a region around the inner portion; and/or
(ii) at least a portion of the primary particles have a plate shape, and each of the secondary particles comprises open pores on the surface thereof, wherein the open pores are formed by the space between the plate-shaped primary particles oriented in a radial direction, and the pores are directed toward the center from the surface of the corresponding secondary particle.

4. The positive active material of any one of claims 1 to 3, wherein:
(i) the lithium nickel-based composite oxide particles comprise a compound represented by Chemical Formula 1:
Chemical Formula 1 Liₓ₁Niₐ₁M¹_{b1}M²_{(1-a1-b1)}O₂
wherein, in Chemical Formula 1, M¹ is at least one of B, Sb, or Nb, and M² is at least one of Al, Ba, Ca, Ce, Cr, Cu, F, Fe, Mg, Mn, Mo, P, S, Si, Sr, Ti, V, W, or Zr, 0.9≤x1≤1.2, 0.8≤a1<1, and 0<b1≤0.2; and/or
(ii) a content of at least one of B, Sb, or Nb is about 0.01 wt% to about 5 wt% based on 100 wt% of the total metals excluding lithium in the lithium nickel-based composite oxide particles.

5. The positive active material of any one of claims 1 to 4, wherein:
(i) a thickness of the first coating layer is about 1 nm to about 10 nm; and/or
(ii) the first coating layer comprises: an oxide of at least one of B, Sb, or Nb; an oxide containing lithium and at least one of B, Sb, or Nb; or a combination thereof; and/or
(iii) a thickness of the second coating layer is about 1 nm to about 20 nm.

6. The positive active material of any one of claims 1 to 5, wherein
the metal in the metal phosphate of the second coating layer is at least one of Al, Ba, Ca, Ce, Co, Cr, Cu, Fe, Mg, Mn, Mo, Ni, Si, Sr, Ti, V, W, Zn, or Zr, optionally wherein:
the metal is at least one of Al or Mg.

7. The positive active material of any one of claims 1 to 6, wherein:
(i) a content of the metal phosphate is about 0.1 wt% to about 3 wt% based on 100 wt% of the total metals excluding lithium in the lithium nickel-based composite oxide particles; and/or
(ii) a content of residual lithium on the surface of the lithium nickel-based composite oxide particles based on 100 wt% of the positive active material in a rechargeable lithium battery is less than about 0.2 wt%.

8. A method of preparing a positive active material for a rechargeable lithium battery, the method comprising:
mixing a nickel-based composite hydroxide having a molar content of nickel greater than or equal to about 80 mol% based on the total elements excluding oxygen and hydrogen, a raw material containing at least one of B, Sb, or Nb, and a lithium raw material;
performing a first heat treatment to obtain lithium nickel-based composite oxide particles, wherein the lithium nickel-based composite oxide particles comprise cobalt-free layered lithium nickel-based composite oxide;
mixing the obtained lithium nickel-based composite oxide particles, a metal raw material, and a phosphorus-based raw material; and
performing a second heat treatment.

9. The method of claim 8, wherein:
(i) the nickel-based composite hydroxide is represented by Chemical Formula 11:
Chemical Formula 11 Niₐ₁₁M¹¹_{b11}(OH)₂
wherein, in Chemical Formula 11, M¹¹ is at least one of Al, Ba, Ca, Ce, Cr, Cu, F, Fe, Mg, Mn, Mo, P, S, Si, Sr, Ti, V, W, or Zr, 0.8≤a11≤1, and 0≤b11≤0.2; and/or
(ii) based on 100 parts by mole of the total metals of the nickel-based composite hydroxide,
about 0.01 parts by mole to about 3 parts by mole of the raw material containing at least one B, Sb, or Nb is mixed, and
about 90 parts by mole to about 120 parts by mole of the lithium raw material is mixed.

10. The method of claim 8 or claim 9, wherein:
(i) the first heat treatment is performed in a temperature range of about 600 °C to about 1000 °C; and/or
(ii) the lithium nickel-based composite oxide particles obtained after the first heat treatment are in the form of secondary particles each formed by aggregation of a plurality of primary particles, and an average particle size of the plurality of primary particles is less than about 200 nm.

11. The method of any one of claims 8 to 10, wherein:
the lithium nickel-based composite oxide particles obtained after the first heat treatment comprise
a first coating layer on the surface of the lithium nickel-based composite oxide particles and containing at least one of B, Sb, or Nb,
wherein a thickness of the first coating layer is about 1 nm to about 10 nm, optionally wherein:
the first coating layer comprises:
an oxide of at least one of B, Sb, or Nb; and/or
an oxide containing lithium and at least one of B, Sb, or Nb.

12. The method of any one of claims 8 to 11, wherein:
(i) based on 100 parts by mole of the total metals excluding lithium in the lithium nickel-based composite oxide,
about 0.1 parts by mole to about 3 parts by mole of each of the metal raw material and the phosphorus-based material are mixed; and/or
(ii) the metal raw material is a compound containing at least of Al, Ba, Ca, Ce, Co, Cr, Cu, Fe, Mg, Mn, Mo, Ni, Si, Sr, Ti, V, W, Zn, or Zr; and/or
(iii) the second heat treatment is performed in a temperature range of about 500 °C to about 700 °C.

13. The method of any one of claims 8 to 12, wherein:
(i) through the second heat treatment, a positive active material for a rechargeable lithium battery comprising the lithium nickel-based composite oxide particles obtained in the first heat treatment and a second coating layer located on a surface of the lithium nickel-based composite oxide particles and containing a metal phosphate is obtained, and
wherein a thickness of the second coating layer is about 1 nm to about 20 nm;
and/or
(ii) a content of residual lithium on the surface of the lithium nickel-based composite oxide particles obtained after the first heat treatment is greater than or equal to about 0.9 wt% based on 100 wt% of the lithium nickel-based composite oxide, and
a content of residual lithium on the surface of the positive active material particles obtained after the second heat treatment is less than about 0.2 wt% based on 100 wt% of the positive active material.

14. A rechargeable lithium battery, comprising
a positive electrode comprising the positive active material of any one of claims 1 to 7,
a negative electrode, and
an electrolyte.
